# EUROPÄISCHE PATENTANMELDUNG

(11) **EP 1 045 539 A2**
(43) Veröffentlichungstag der Anmeldung: **18.10.2000**
(21) Anmeldenummer: 00440071.9
(22) Anmeldetag: 10.03.2000
(51) Int. Cl.: H04J 3/16, H04J 3/14, H04L 9/00

(54) **Überwachung der Übertragungsqualität in einem digitalen Nachrichtenübertragungsnetz**

(30) Priorität: 13.04.1999 DE 19916490
(71) Anmelder: ALCATEL, 75008 Paris (FR)
(72) Erfinder: Weiss, Bernd, Dr., 70825 Korntal (DE)
(74) Vertreter: Urlichs, Stefan

(57) **Zusammenfassung**

In einem digitalen Nachrichtenübertragungsnetz werden für jede Verbindung (38) in jedem Netzelement (27), das die Verbindung schaltet oder terminiert, Überwachungsdaten (19, 20) ermittelt und als verwaltete Objekte in einer Datenbank (22) des jeweiligen Netzelementes (27) abgelegt. Auf Anfrage werden diese Überwachungsdaten (19, 20) an eine Netzwerkmanagementeinrichtung übertragen. Die Überwachungsdaten (19, 20) können jedoch bislang nicht als Nachweis für eine erbrachte Leistung verwendet werden, da sie manipulierbar sind.

Nach dem erfindungsgemäßen Verfahren werden die Überwachungsdaten (19, 20) vor der Übertragung (7) verschlüsselt (5) und mit einer elektronischen Unterschrift versehen. Dazu ist jedes Netzelement (27) mit einer Verschlüsselungseinrichtung (21) ausgestattet.

## Beschreibung

Die Erfindung betrifft ein Verfahren zum Überwachen der Übertragungsqualität in einem digitalen Nachrichtenübertragungsnetz und ein Netzelement für ein digitales Nachrichtenübertragungsnetz.

Digitale Nachrichtenübertragungsnetze sind nach einem mehrschichtigen Modell wie z.B. dem 7-Schicht-OSI-Modell strukturiert. Zur Überwachung der Übertragungsqualität (performance monitoring) in digitalen Nachrichtenübertragungsnetzen, insbesondere in synchronen digitalen Nachrichtenübertragungsnetzen wie SDH- oder SONET-Netzen, ist es üblich, in jeder Schicht Überwachungsdaten zu ermitteln, zu Speichern und auf Abruf an eine zentrale Steuerungseinheit, das Netzwerkmanagementsystem, zu übertragen. Dazu werden verschiedene Parameter, die die Übertragungsqualität charakterisieren, über vorbestimmte Zeitspannen - typischerweise 15 min und 24 h - bestimmt und gezählt. Typische Parameter hierfür sind: *background block errors, errored seconds* und *severely errored seconds*. Die Überwachung findet in Netzelementen des Nachrichtenübertragungsnetzes statt, in denen Verbindungen geschaltet oder terminiert werden. Die Überwachungsdaten werden als verwaltete Objekte (*managed objects*) in einer als MIB (*management information base*) bezeichneten Datenbank des jeweiligen Netzelementes abgelegt.

Aus dem Artikel "On the Implementation of a Prototype for Performance Management Services" von T. Apostolopoulos et al., Proceedings IEEE Symposium on Computers and Communications, 27.-29. Juni 1995, ist ein Performance-Monitoring-Verfahren für ein TCP/IP-Netzwerk bekannt, bei dem Überwachungsdaten als verwaltete Objekte in einer MIB-Datenbank gespeichert und an eine Verwaltungseinrichtung übertragen werden. Das Verfahren ist für ein einziges homogenes, aus Teilnetzen aufgebautes Netzwerk vorgesehen und geeignet, das einem einzigen Betreiber untersteht und von einem einzigen zentralen Netzwerkmanagementsystem verwaltet wird.

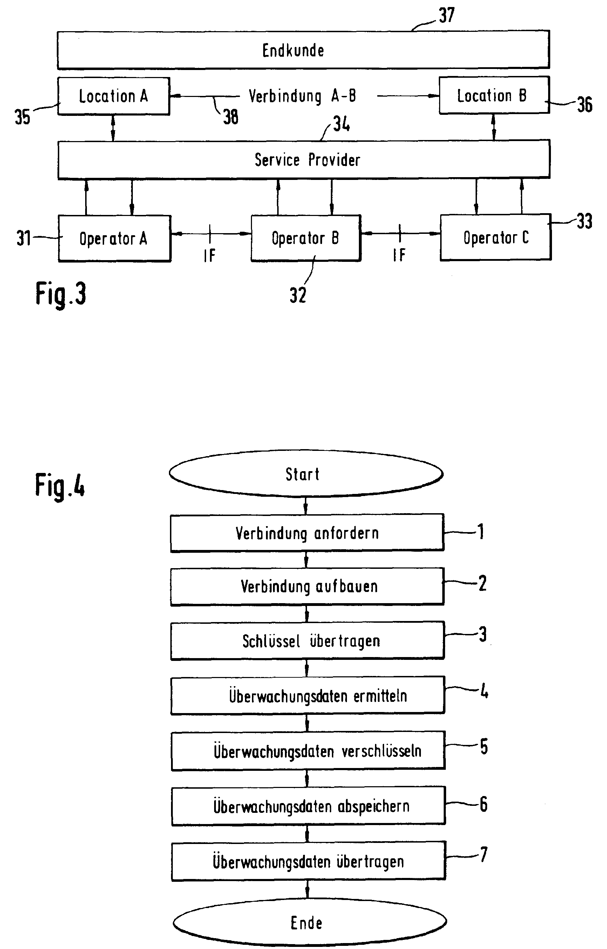

In digitalen Nachrichtenübertragungsnetzen wird die geschilderte Situation durch die zunehmende Zahl von Netzbetreibern und Diensteanbietern, die im allgemeinen nicht identisch sind, komplexer. Diese Situation ist beispielhaft in Figur 3 dargestellt: Ein Endkunde 37 bestellt bei einem Diensteanbieter 34 eine Verbindung 38 von einem Ort A 35 zu einem Ort B 36. Der Diensteanbieter 34 arbeitet mit mehreren Netzwerkbetreibern 31, 32, 33 zusammen, die jeweils Teilverbindungen bereitstellen. Der Diensteanbieter 34 bucht bei den Netzbetreibern die Teilverbindungen und schaltet diese an Schnittstellen IF zu der vom Endkunden gewünschten Verbindung 38 zusammen.

Der Diensteanbieter 34 stellt dem Endkunden 37 die bestellte Verbindung 38 zur Verfügung und garantiert eine vorbestimmte Übertragungsqualität. Die Netzbetreiber 31, 32, 33 garantieren dem Diensteanbieter 34 für die von ihnen geschalteten Teilverbindungen jeweils eine vorbestimmte Übertragungsqualität. Im Gegenzug werden dem Endkunden 37 von dem Diensteanbieter 34 und dem Diensteanbieter 34 von den Netzbetreibern 31, 32, 33 Gebühren für die erbrachte Leistung in Rechnung gestellt.

Jeder Netzbetreiber hat ein eigenes Netzwerkmanagementsystem in dem Überwachungsdaten gesammelt und abgefragt werden können. Diese Daten geben Aufschluß über die tatsächliche Übertragungsqualität und damit über die Qualität der erbrachten Leistung. Weder der Diensteanbieter noch der Endkunde haben bislang Zugriff auf die Überwachungsdaten der einzelnen Netzbetreiber und können somit die tatsächliche Übertragungsqualität nicht feststellen und überwachen.

Für den Diensteanbieter besteht der Wunsch, die tatsächliche Übertragungsqualität feststellen zu können und im Streitfall dem Endkunden und den Netzbetreibern den Nachweis für die tatsächlich erbrachte Leistung führen zu können. Ein solcher Nachweis ließe sich mit den bisherigen Überwachungsdaten nicht führen, da sie manipulierbar sind. Es ist daher eine Aufgabe der Erfindung, ein sicheres Verfahren zur Überwachung der Übertragungsqualität anzugeben. Eine weitere Aufgabe der Erfindung besteht darin, ein Netzelement für ein digitales Nachrichtenübertragungsnetz anzugeben, welches die sichere Überwachung der Übertragungsqualität einer geschalteten Verbindung ermöglicht.

Die Aufgabe wird hinsichtlich des Endgerätes gelöst durch die Merkmale des Anspruchs 1 und hinsichtlich des Verfahren durch die Merkmale des Anspruchs 6. Vorteilhafte Ausgestaltungen sind den abhängigen Ansprüchen zu entnehmen.

Ein Vorteil der Erfindung besteht darin, daß durch die verwendete Verschlüsselung der Überwachungsdaten Manipulation ausgeschlossen wird und die Überwachungsdaten zum Nachweis der tatsächlich erbrachten Leistung dienen können.

Im folgenden wird die Erfindung anhand der Figuren 1 bis 4 in einem Ausführungsbeispiel erläutert. Es zeigt:
- Figur 1:: Ein Blockdiagramm mit den Funktionen der Überwachungseinrichtung und der erfindungsgemäß nachgeschalteten Verschlüsselung,
- Figur 2:: ein Blockschaltbild eines erfindungsgemäßen Netzelementes,
- Figur 3:: den logische Aufbau einer Verbindung in einem digitalen Nachrichtenübertragungsnetz und
- Figur 4:: ein Flußdiagramm des erfindungsgemäßen Verfahrens.

Ein Grundgedanke der Erfindung besteht darin, die Integrität von Überwachungsdaten, die im Rahmen des Performance Monitoring aufgezeichnet und gespeichert werden, durch die Verwendung eines Verschlüsselungsverfahren, z.B. durch eine elektronische Unterschrift, zu gewährleisten.

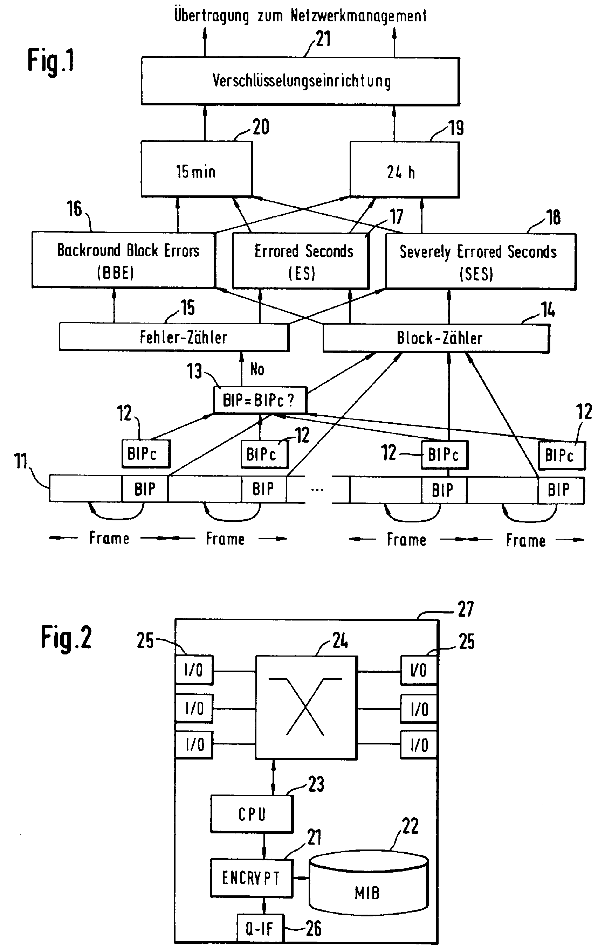

Die Bestimmung der Überwachungsdaten in einem Netzelement des digitalen Nachrichtenübertragungsnetzes ist in Figur 1 beispielhaft gezeigt. Zunächst wird aber der in Figur 2 schematisch dargestellte Aufbau des Netzelementes erläutert: Das Netzelement 27 hat eine Anzahl von Ein- und Ausgängen I/O 25, die über eine Schaltmatrix 24 miteinander verbunden sind. An die Schaltmatrix 24 ist eine Überwachungseinrichtung CPU 23 angeschlossen, welche für jede geschaltete Verbindung die in Figur 1 gezeigten Funktionen ausführt. Es kann sich bei der Schaltmatrix 24 beispielsweise um einen Prozessor CPU mit zugehörigem Speicher handeln, wobei die Funktionen als Teile eines Steuerprogrammes realisiert sind. Die von der Überwachungseinrichtung CPU 23 ermittelten Überwachungsdaten werden einer Verschlüsselungseinrichtung ENCRYPT 21 zugeführt und anschließend in einem als Datenbank strukturierten Speicher 22 als verwaltete Objekte abgespeichert. Solche verwalteten Objekte sind allgemein als *managed objects* bekannt. Auf Abruf können die verschlüsselten Daten über eine Schnittstelle Q-IF 26 übertragen werden. Bei der Schnittstelle kann es sich z.B. um die für Netzwerkmanagement übliche Q-Schnittstelle handeln. Die Verschlüsselungseinrichtung 21 kann vorzugsweise mit dem als Überwachungseinrichtung 23 arbeitenden Prozessor CPU in einem einzigen Chip integriert werden. Bei dem Netzelement 27 kann es z.B. um einen digitalen Crossconnect oder einen Add/Drop-Multiplexer eines SDH- oder SONET-Netzwerkes handeln.

Im einzelnen führt die Überwachungseinrichtung die in Figur 1 gezeigten Funktionen aus: An einem der Ein/Ausgänge 25 des Netzelementes 27 wird ein Nachrichtensignal 11 empfangen, das in Rahmen strukturiert ist. Ein Rahmen besteht jeweils aus einem Nutzdatenblock und einem Kopfbereich. Im Kopfbereich der Rahmen wird eine Prüfsumme BIP übertragen. Aus jedem Nutzdatenblock wird eine neue Prüfsumme BIPc 12 berechnet und mit der im Kopfbereich enthaltenen Prüfsumme BIP verglichen 13. Wird hierbei eine Abweichung festgestellt, so liegt ein fehlerhaft empfangener Block vor. Gezählt werden sowohl die empfangenen Blöcke 14 als auch die fehlerhaft empfangenen Blöcke 15. Aus den Zählwerten 14, 15 werden die an sich bekannten Parameter *background block errors (BBE) 16, errored seconds (ES)* 17 und *severely errored seconds* (SES) 18 ermittelt. Eine *errored* second liegt vor, wenn in einem Sekundenintervall Fehler vorliegen und jedoch weniger als 30% der Blöcke fehlerhaft sind. Eine severely *errored* second liegt vor, wenn in einem Sekundenintervall mehr als 30% der empfangenen Blöcke fehlerhaft sind. Die Parameter werden über 15 min und über 24 h addiert 19, 20. Diese Werte 19, 20 stellen die Überwachungsdaten dar und liegen als ASCII-Text vor.

Das Netzelement 27 erzeugt für jede Verbindung, die es schaltet oder terminiert einen solchen Satz von Überwachungsdaten 19, 20. Vorteilhafterweise wird jeder Datensatz 19, 20 als verwaltetes Objekt behandelt und gespeichert.

Die Überwachungsdaten 19, 20 werden nun erfindungsgemäß mittels der nachgeschalteten Verschlüsselungseinrichtung 21 verschlüsselt. Die Verschlüsselungseinrichtung 21 wandelt die Überwachungsdaten 19, 20 so um, daß deren Authentizität und Integrität später feststellbar ist. Zu diesem Zweck ergänzt die Verschlüsselungseinrichtung 21 jeden Datensatz der Überwachungsdaten 19, 20 mit einer elektronischen Unterschrift.

Zur Verschlüsselung eignet sich besonders ein Verschlüsselungsalgorithmus mit privatem und öffentlichem Schlüssel, wie z.B. der an sich bekannte RSA-Algorithmus, wobei die Verschlüsselungseinrichtung 21 den dafür benötigten Schlüssel über das Nachrichtenübertragungsnetz läd. Jeder Schlüssel wird vorzugsweise von einer unabhängigen, vertrauenswürdigen Organisation erzeugt und zur Verfügung gestellt, beispielsweise vom Deutschen Bundesamt für Telekommunikation. Durch das allgemein anerkannte Ansehen dieser unabhängigen Organisation wird die Integrität der verschlüsselten Daten zusätzlich garantiert.

Durch die elektronische Unterschrift können die Überwachungsdaten von jedem Berechtigten, der über den Schlüssel verfügt, gelesen nicht jedoch verändert werden.

Jeder verschlüsselte Datensatz wird nun als verwaltetes Objekt in einer MIB-Datenbank 22 (managment information base) des Netzelementes 27 abgelegt und kann auf Abruf über die dafür vorgesehene Schnittstelle Q-IF 26 an ein Netzwerkmanagementsystem übertragen werden. Die verschlüsselten Überwachungsdaten für eine bestimmte Verbindung können nun auf Abruf auch Diensteanbietern oder Endkunden zur Verfügung gestellt, denen Gebühren für die Verbindung berechnet werden sollen.

In Figur 3 ist die eingangs beschriebene logische Aufbau einer Verbindung 38 in einem digitalen Nachrichtenübertragungsnetz dargestellt. Ein Endkunde 37 fordert bei einem Diensteanbieter 34 eine Verbindung 38 an. Der Diensteanbieter 34 hat bei drei verschiedenen Netzbetreibern 31, 32, 33 jeweils Teilverbindungen gemietet, z.B. in Form von Mietleitungen (*leased lines*). Er schaltet die Teilverbindungen an Schnittstellen IF zu der angeforderten Verbindung 38 zusammen und stellt diese seinem Kunden 37 zur Verfügung. Um seinem Kunden 37 die Verbindung 38 in der geforderten Qualität garantieren zu können, erhält er von jedem Netzbetreiber 31, 32, 33 die verschlüsselten Überwachungsdaten jeder Teilverbinundung. Er kann diese Überwachungsdaten sowohl seinem Kunden als auch den Netzbetreibern gegenüber als Nachweis für die erbrachte Leistung verwenden. Wird die geforderte Übertragungsqualität nicht eingehalten, so kann dies z.B. mit einer Gebührenermäßigung gegenüber dem Endkunden und einem Abschlag von den Mietkosten für die Mietleitungen ausgeglichen werden.

Eine besonders vorteilhafte Anwendung der Erfindung besteht darin, daß ein Diensteanbieter, der eine Verbindung bei einem Netzbetreiber anfordert, diesem den Schlüssel für diese Verbindung vorgibt. Der Schlüssel ist nur für die eine angeforderte Verbindung gültig. Der Diensteanbieter kann die mit diesem Schlüssel verschlüsselten Überwachungsdaten von den Netzelementen oder der Netzwerkmanagementsystem der Netzbetreibers abfragen. Dadurch erhält er Kontrolle über die tatsächliche Verbindungsqualität und hat die Garantie, daß die Überwachungsdaten tatsächlich mit der angeforderten Verbindung korrelieren.

Für das erfindungsgemäße Verfahren ergibt sich der in Figur 3 dargestellte Ablauf:
- Schritt 1:: Ein Diensteanbieter oder ein Endkunde fordert bei einem Netzbetreiber eine Verbindung an.
- Schritt 2:: Der Netzbetreiber schaltet die angeforderte Verbindung in seinem Nachrichtenübertragungsnetz und stellt sie dem Diensteanbieter oder Endkunden zur Verfügung.
- Schritt 3:: An jedes Netzelement, durch das die Verbindung geschaltet oder terminiert wird, wird ein Schlüssel übertragen.
- Schritt 4:: In jedem Netzelement werden Überwachungsdaten ermittelt.
- Schritt 5:: Die Überwachungsdaten werden in jedem Netzelement mit dem übertragenen Schlüssel verschlüsselt und mit einer elektronischen Unterschrift versehen.
- Schritt 6:: Die verschlüsselten Überwachungsdaten werden in einer Datenbank jedes Netzelementes als verwaltete Objekte gespeichert.
- Schritt 7:: Auf Anfrage werden die verschlüsselten Überwachungsdaten an den Diensteanbieter oder Endkunden übertragen.

## Patentansprüche

1. Netzelement (27) für ein digitales Nachrichtenübertragungsnetz mit:
- einer Schaltmatrix (24) zum Schalten von Verbindungen (38) zwischen Eingängen (25) und Ausgängen (25) des Netzelementes (27),
- einer Überwachungseinrichtung (23) zum Bestimmen von Überwachungsdaten (19, 20) für jede geschaltete Verbindung (38),
- einem Speicher (22) zum Speichern der Überwachungsdaten (19, 20) und
- einer Schnittstelle (26) zum Übertragen der gespeicherten Überwachungsdaten (19, 20),
**gekennzeichnet durch**
eine Verschlüsselungseinrichtung (21) zum Verschlüsseln der Überwachungsdaten (19, 20).

2. Netzelement (27) nach Anspruch 1, bei dem die Überwachungsdaten (19, 20) mit einer elektronischen Unterschrift versehen werden.

3. Netzelement (27) nach Anspruch 1, bei dem die Überwachungsdaten (19, 20) in Form von verwalteten Objekten abgespeichert werden und bei dem der Speicher (22) als Datenbank strukturiert ist.

4. Netzelement (27) nach Anspruch 1, bei dem die Verschlüsselungseinrichtung (21) mit einem privaten und einem öffentlichen Schlüssel arbeitet.

5. Netzelement (27) nach Anspruch 1, bei dem ein zur Verschlüsselung benötigter Schlüssel über das Nachrichtenübetragungsnetz in das Netzelement (27) geladen wird.

6. Verfahren zum Überwachen der Übertragungsqualität in einem digitalen Nachrichtenübertragungsnetz mit folgenden Schritten:
- Schalten (2) von Verbindungen zwischen Endpunkten (35, 36) in dem Nachrichtenübertragungsnetz mittels Netzelementen (27),
- Bestimmen (4) von Überwachungsdaten (19, 20) für jede geschaltete Verbindung (38) in den Netzelementen (27),
- Speichern (6) der Überwachungsdaten (19, 20) in den Netzelementen (27) und
- Übertragen (7) der gespeicherten Überwachungsdaten (19, 20) von den Netzelementen (27) an eine Verwaltungseinrichtung,
**dadurch gekennzeichnet**, daß
die Überwachungsdaten(19, 20) vor der Übertragung (7) verschlüsselt werden (5).

7. Verfahren nach Anspruch 6, bei dem zur Verschlüsselung (5) ein Verschlüsselungsalgorithmus mit einem privaten und einem öffentlichen Schlüssel eingesetzt wird.

8. Verfahren nach Anspruch 6, bei dem ein zur Verschlüsselung (5) eingesetzter Schlüssel nur für eine einzige Verbindung (38) gültig ist.
